# EUROPEAN PATENT APPLICATION

(11) **EP 3 404 939 A1**
(43) Date of publication of application: **21.11.2018**
(21) Application number: 17738683.6
(22) Date of filing: 13.01.2017
(51) Int. Cl.: H04W 4/02, H04W 64/00

(54) **DEVICE AND METHOD FOR TRANSMITTING GEOGRAPHICAL INFORMATION BY D2D TERMINAL IN WIRELESS COMMUNICATION SYSTEM**

(30) Priority: 14.01.2016 US 201662278982 P; 17.02.2016 US 201662296094 P; 13.05.2016 US 201662335700 P
(71) Applicant: LG Electronics Inc., Seoul 07336 (KR)
(72) Inventor: CHAE, Hyukjin, Seoul 06772 (KR); SEO, Hanbyul, Seoul 06772 (KR); PARK, Jonghyun, Seoul 06772 (KR)
(74) Representative: Cabinet Plasseraud
(86) International application number: PCT/KR2017/000486
(87) International publication number: WO 2017/123054

(57) **Abstract**

Disclosed is a method for transmitting the geographical information of a device-to-device (D2D) terminal in a wireless communication system supporting D2D communication. More particularly, a method for transmitting geographical information by a D2D terminal in a wireless communication system supporting D2D communication comprises the steps of: measuring the geographical information of a D2D terminal; and transmitting a message, which comprises the geographical information of the D2D terminal which has been measured, by means of a particular resource region which is determined in accordance with the location of the D2D terminal.

## Description

### [Technical Field]

The present invention relates to a wireless communication system, and more particularly, to a method and device for transmitting geographical information in a wireless communication system for supporting device to device (D2D) communication.

### [Background Art]

A wireless communication system has been widely developed to provide various kinds of communication services such as voice and data. Generally, the wireless communication system is a multiple access system that can support communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier-frequency division multiple access (MC-FDMA) system.

Device to device (D2D) communication refers to a communication scheme that a direct link is configured between user equipments (UEs) to allow the UEs to directly transmit and receive voice and data to and from each other without through a base station (evolved NodeB; eNB). D2D communication may include user equipment-to-user equipment (UE-to-UE) communication, peer-to-peer communication, etc. Also, the D2D communication scheme may be applied to machine-to-machine (M2M) communication, machine type communication (MTC), etc.

D2D communication is considered as a solution for solving load of a base station, which is caused by data traffic which is rapidly increased. For example, according to D2D communication, since data are transmitted and received between devices without a base station unlike the conventional wireless communication system, overload of a network may be reduced. Also, with the introduction of D2D communication, advantages of process reduction of the base station, power consumption reduction of devices which join in D2D communication, increase of data transmission rate, increase of network capacity, load distribution, cell coverage enlargement, etc. may be expected.

### [Disclosure]

### [Technical Problem]

An object of the present invention devised to solve the problem lies in a method of transmitting geographical information of a device to device (D2D) user equipment (UE) in a wireless communication system for supporting device to device (D2D) communication.

It will be appreciated by persons skilled in the art that the objects that could be achieved with the present invention are not limited to what has been particularly described hereinabove and the above and other objects that the present invention could achieve will be more clearly understood from the following detailed description.

### [Technical Solution]

The object of the present invention can be achieved by providing a method of transmitting geographical information by a device to device (D2D) user equipment (UE) in a wireless communication system for supporting D2D communication, the method including measuring the geographical information of the D2D UE, and transmitting a message including the measured geographical information of the D2D UE through a specific resource region determined depending on a position of the D2D UE.

In another aspect of the present invention, provided herein is a device to device (D2D) user equipment (UE) for transmitting geographical information in a wireless communication system for supporting D2D communication, including a transmission module, and a processor connected to the transmission module, wherein the processor is configured to measure the geographical information of the D2D UE and to transmit a message including the measured geographical information of the D2D UE through a specific resource region determined depending on a position of the D2D UE, through the transmission module.

A transmission resource may be divided into a plurality of resource regions and the plurality of resource regions may be mapped to respective one or more reference points.

The one or more reference points may be at least one of a base station (BS) or a roadside unit (RSU) and the plurality of resource regions may be available when reception power of a signal received from the one or more mapped reference points satisfies a predetermined condition.

The specific resource region may be one or more of the available resource regions.

One or more reference points are any one of virtual points configured with coordinate information or a virtual range configured with coordinate information.

The geographical information of the D2D UE may be included in any one of a control message and media access control (MAC) header of the message.

The geographical information of the D2D UE may include at least one of a position, speed, or direction of the D2D UE.

The message including the measured geographical information of the D2D UE may be transmitted when a specific condition is satisfied.

The specific condition may be one or more of a case in which a reference point closest to the D2D UE is changed, a case in which the D2D UE is moved away from the reference point by a specific distance or more, a case in which the D2D UE is moved away from a position corresponding to a time point of transmitting the message by a specific range or more, or a case in which a predetermined time period elapses from a time point when the UE transmits the message.

The geographical information of the D2D UE may be coordinate information of the UE, measured using a global positioning system (GPS).

The geographical information of the D2D UE may be one or more of coordinate information and identification (ID) of a reference point closest to the D2D UE, or distance information from the reference point.

The geographical information of the D2D UE may include a time stamp.

### [Advantageous Effects]

According to the present invention, geographical information of a device to device (D2D) user equipment (UE) may be transmitted in a wireless communication system for supporting D2D communication.

It will be appreciated by persons skilled in the art that that the effects that could be achieved with the present invention are not limited to what has been particularly described hereinabove and other advantages of the present invention will be more clearly understood from the following detailed description.

### [Description of Drawings]

FIG. 1 is a diagram illustrating a structure of a radio frame;
FIG. 2 is a diagram illustrating a resource grid at a downlink slot;
FIG. 3 is a diagram illustrating a structure of a downlink subframe;
FIG. 4 is a diagram illustrating a structure of an uplink subframe;
FIG. 5 is a diagram for explaining D2D communication;
FIG. 6 is a diagram for explaining a configuration of a resource unit for performing D2D communication;
FIGS. 7A to 7C are diagrams for explanation of a communication system according to an embodiment of the present invention;
FIG. 8 is a diagram for explanation of a reference point according to an embodiment of the present invention;
FIG. 9 is a diagram for explanation of a resource region according to an embodiment of the present invention; and
FIG. 10 is a diagram for configurations of devices according to one embodiment of the present invention.

### [Best Mode]

The following embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment.

In this specification, the embodiments of the present invention will be described based on data transmission and reception between a base station and a user equipment. In this case, the base station means a terminal node of a network, which performs direct communication with the user equipment. A specific operation which has been described as being performed by the base station may be performed by an upper node of the base station as the case may be.

In other words, it will be apparent that various operations performed for communication with the user equipment in the network which includes a plurality of network nodes along with the base station may be performed by the base station or network nodes other than the base station. At this time, the 'base station' (BS) may be replaced with terminologies such as a fixed station, Node B, eNode B (eNB), and an access point (AP). Also, a relay may be replaced with terminologies such as a relay node (RN) and a relay station (RS). Also, a 'terminal' may be replaced with terminologies such as a user equipment (UE), a mobile station (MS), a mobile subscriber station (MSS), and a subscriber station (SS).

Specific terminologies used in the following description are provided to assist understanding of the present invention, and various modifications may be made in the specific terminologies within the range that they do not depart from technical spirits of the present invention.

In some cases, to prevent the concept of the present invention from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

The embodiments of the present invention may be supported by standard documents disclosed in at least one of wireless access systems, i.e., IEEE 802 system, 3GPP system, 3GPP LTE system, 3GPP LTE, 3GPP LTE-A (LTE-Advanced) system, and 3GPP2 system. Namely, among the embodiments of the present invention, apparent steps or parts, which are not described to clarify technical spirits of the present invention, may be supported by the above documents. Also, all terminologies disclosed herein may be described by the above standard documents.

The following technology may be used for various wireless access technologies such as CDMA (code division multiple access), FDMA (frequency division multiple access), TDMA (time division multiple access), OFDMA (orthogonal frequency division multiple access), and SC-FDMA (single carrier frequency division multiple access). The CDMA may be implemented by the radio technology such as UTRA (universal terrestrial radio access) or CDMA2000. The TDMA may be implemented by the radio technology such as global system for mobile communications (GSM)/general packet radio service (GPRS)/enhanced data rates for GSM evolution (EDGE). The OFDMA may be implemented by the radio technology such as IEEE 802.11 (Wi-Fi), IEEE 802.16 (WiMAX), IEEE 802.20, and evolved UTRA (E-UTRA). The UTRA is a part of a universal mobile telecommunications system (UMTS). A 3rd generation partnership project long term evolution (3GPP LTE) is a part of an evolved UMTS (E-UMTS) that uses E-UTRA, and adopts OFDMA in a downlink and SC-FDMA in an uplink. LTE-advanced (LTE-A) is an evolved version of the 3GPP LTE. WiMAX may be described by the IEEE 802.16e standard (WirelessMAN-OFDMA Reference System) and the advanced IEEE 802.16m standard (WirelessMAN-OFDMA Advanced system). For clarification of the description, although the present invention will be described based on the 3GPP LTE/LTE-A, it is to be understood that technical spirits of the present invention are not limited to the 3GPP LTE/LTE-A.

### 3GPP LTE/LTE-A system to which the present invention may be applied

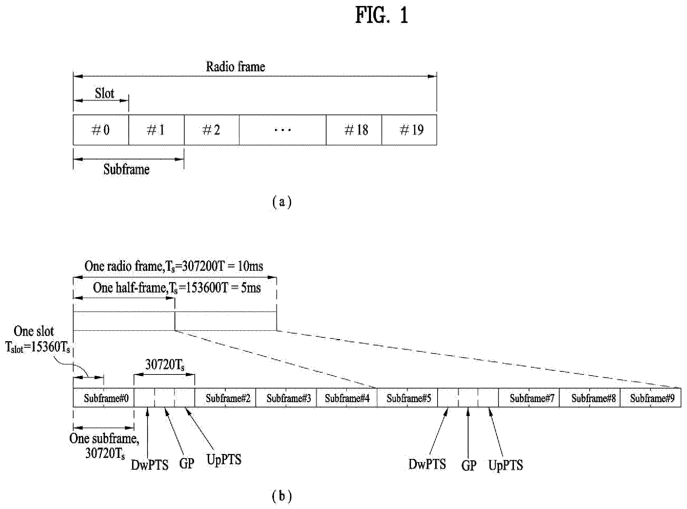

A structure of a radio frame will be described with reference to FIG. 1.

In a cellular OFDM communication system, uplink/downlink data packet transmission is performed in a subframe unit, wherein one subframe is defined by a given time interval that includes a plurality of OFDM symbols. The 3GPP LTE standard supports a type 1 radio frame structure applicable to frequency division duplex (FDD) and a type 2 radio frame structure applicable to time division duplex (TDD).

FIG. 1(a) is a diagram illustrating a structure of a type 1 radio frame. The downlink radio frame includes 10 subframes, each of which includes two slots in a time domain. A time required to transmit one subframe will be referred to as a transmission time interval (TTI). For example, one subframe may have a length of 1ms, and one slot may have a length of 0.5ms. One slot includes a plurality of OFDM symbols in a time domain and a plurality of resource blocks (RB) in a frequency domain. Since the 3GPP LTE system uses OFDM in a downlink, OFDM symbols represent one symbol interval. The OFDM symbol may be referred to as SC-FDMA symbol or symbol interval. The resource block (RB) is a resource allocation unit and may include a plurality of continuous subcarriers in one slot.

The number of OFDM symbols included in one slot may be varied depending on configuration of a cyclic prefix (CP). Examples of the CP include an extended CP and a normal CP. For example, if the OFDM symbols are configured by the normal CP, the number of OFDM symbols included in one slot may be 7. If the OFDM symbols are configured by the extended CP, since the length of one OFDM symbol is increased, the number of OFDM symbols included in one slot is smaller than that of OFDM symbols in case of the normal CP. For example, in case of the extended CP, the number of OFDM symbols included in one slot may be 6. If a channel state is unstable like the case where the user equipment moves at high speed, the extended CP may be used to reduce inter-symbol interference.

If the normal CP is used, since one slot includes seven OFDM symbols, one subframe includes 14 OFDM symbols. At this time, first two or three OFDM symbols of each subframe may be allocated to a physical downlink control channel (PDCCH), and the other OFDM symbols may be allocated to a physical downlink shared channel (PDSCH).

FIG. 1(b) is a diagram illustrating a structure of a type 2 radio frame. The type 2 radio frame includes two half frames, each of which includes five subframes, a downlink pilot time slot (DwPTS), a guard period (GP), and an uplink pilot time slot (UpPTS). One subframe includes two slots. The DwPTS is used for initial cell search, synchronization or channel estimation at the user equipment. The UpPTS is used for channel estimation at the base station and uplink transmission synchronization of the user equipment. Also, the guard period is to remove interference occurring in the uplink due to multipath delay of downlink signals between the uplink and the downlink. Meanwhile, one subframe includes two slots regardless of the type of the radio frame.

The structure of the radio frame is only exemplary, and various modifications may be made in the number of subframes included in the radio frame, the number of slots included in the subframe, or the number of symbols included in the slot.

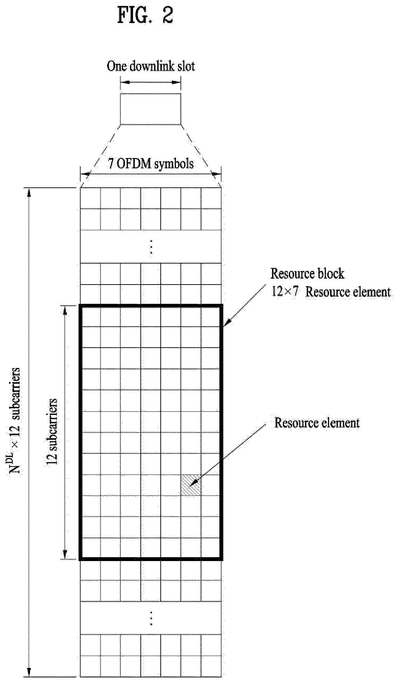

FIG. 2 is a diagram illustrating a resource grid at a downlink slot. One downlink slot includes, but not limited to, seven OFDM symbols in a time domain, and one resource block (RB) includes, but not limited to, twelve subcarriers in a frequency domain. For example, although one slot includes seven OFDM symbols in case of the normal CP, one slot may include six OFDM symbols in case of the extended CP. Each element on the resource grid will be referred to as a resource element (RE). One resource block (RB) includes 12×7(6) resource elements. The number NDL of resource blocks (RBs) included in the downlink slot depends on a downlink transmission bandwidth. A structure of an uplink slot may be the same as that of the downlink slot.

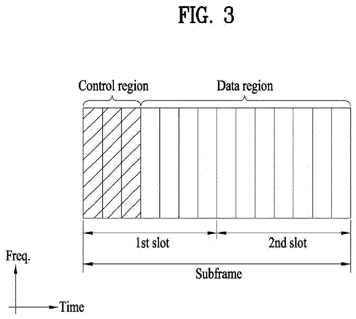

FIG. 3 is a diagram illustrating a structure of a downlink subframe. Maximum three OFDM symbols located at the front of the first slot within the subframe correspond to a control region to which a control channel is allocated. The other OFDM symbols correspond to a data region to which a physical downlink shared channel (PDSCH) is allocated. Examples of the downlink control channel used in the 3GPP LTE system include a PCFICH (Physical Control Format Indicator CHannel), a PDCCH (Physical Downlink Control CHannel), and a PHICH (Physical Hybrid ARQ Indicator CHannel). The PCFICH is transmitted from the first OFDM symbol of the subframe, and includes information on the number of OFDM symbols used for transmission of the control channel within the subframe. The PHICH is a response to uplink transmission, and includes HARQ ACK/NACK (acknowledgement/negative-acknowledgement) signal. The control information transmitted through the PDCCH will be referred to as downlink control information (DCI). The DCI includes uplink or downlink scheduling information or uplink transmission (Tx) power control command for a random user equipment group. The PDCCH includes transport format and resource allocation information of a downlink shared channel (DL-SCH), resource allocation information of an uplink shared channel (UL-SCH), paging information of a paging channel (PCH), system information on the DL-SCH, resource allocation information of an upper layer control message such as a random access response transmitted onto the PDSCH, a set of transmission power control command of an individual user equipment within a random user equipment group, transmission power control information, and activation of voice over Internet protocol (VoIP). A plurality of PDCCHs may be transmitted within the control region. The user equipment may monitor the plurality of PDCCHs. The PDCCH is transmitted by aggregation of one or more continuous control channel elements (CCEs). The CCE is a logic allocation unit used to provide a PDCCH at a predetermined coding rate based on the status of a radio channel. The CCE corresponds to a plurality of resource element groups (REGs). The format of the PDCCH and the number of available bits of the PDCCH are determined depending on the correlation between the number of CCEs and the coding rate provided by the CCE. The base station determines a PDCCH format depending on the DCI transmitted to the user equipment, and attaches cyclic redundancy check (CRC) to the control information. The CRC is masked with a radio network temporary identifier (RNTI) depending on owner or usage of the PDCCH. For example, if the PDCCH is for a specific user equipment, the CRC may be masked with cell-RNTI (C-RNTI) of the corresponding user equipment. If the PDCCH is for a paging message, the CRC may be masked with a paging indicator identifier (P-RNTI). If the PDCCH is for system information (in more detail, system information block (SIB)), the CRC may be masked with system information identifier and system information RNTI (SI-RNTI). The CRC may be masked with a random access RNTI (RA-RNTI) to indicate a random access response that is a response to transmission of a random access preamble of the user equipment.

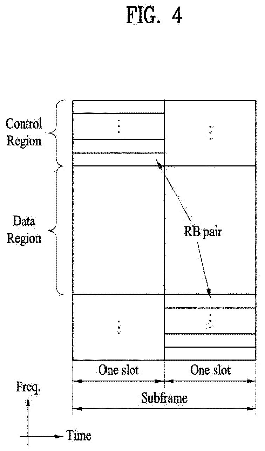

FIG. 4 is a diagram illustrating a structure of an uplink subframe. The uplink subframe may be divided into a control region and a data region on a frequency domain. A physical uplink control channel (PUCCH) which includes uplink control information is allocated to the control region. A physical uplink shared channel (PUSCH) which includes user data is allocated to the data region. In order to maintain single carrier features, one user equipment does not transmit the PUCCH and the PUSCH at the same time. The PUCCH for one user equipment is allocated to resource block (RB) pair for the subframe. Resource blocks (RBs) belonging to the RB pair reserve different subcarriers for two slots. The RB pair allocated to the PUCCH is subjected to frequency hopping at a slot boundary.

### D2D (Device to Device communication)

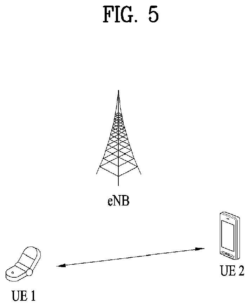

FIG. 5 is a diagram for explaining D2D communication.

Referring to FIG. 5, for example, a UE may correspond to a terminal of a user. If such a network device as an eNB transmits and receives a signal according to a communication scheme between UEs, the eNB can be considered as a UE as well. A UE1 selects a resource unit corresponding to a specific resource from a resource pool corresponding to a set of resources and the UE1 transmits a D2D signal using the selected resource unit. A UE2 corresponding to a reception UE receives a configuration of a resource pool in which the UE1 is able to transmit a signal and detects a signal of the UE1 in the resource pool. In this case, if the UE1 is located at the inside of coverage of an eNB, the eNB can inform the UE1 of the resource pool. If the UE1 is located at the outside of coverage of the eNB, the resource pool can be informed by a different UE or can be determined by a predetermined resource. In general, a resource pool includes a plurality of resource units. A UE selects one or more resource units from among a plurality of the resource units and may be able to use the selected resource unit(s) for D2D signal transmission.

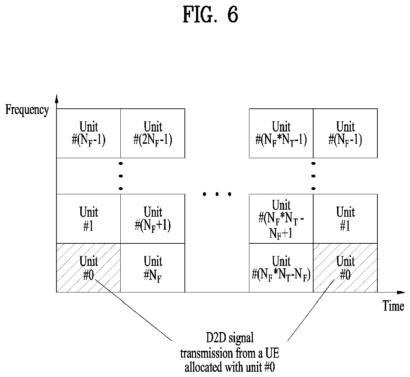

In the following, a resource configuration used in D2D communication is explained. FIG. 6 is a diagram for explaining a configuration of a resource unit for performing D2D communication.

In general, a resource pool includes a plurality of resource units. A UE selects one or more resource units from among a plurality of the resource units and may be able to use the selected resource unit(s) for D2D signal transmission. FIG. 6 illustrates one of methods for configuring resource units. Referring to FIG. 6, the entire frequency resources are divided into the NF number of resource units and the entire time resources are divided into the NT number of resource units. In particular, it is able to define NF*NT number of resource units in total.

In this case, a resource pool can be repeated with a period of NT subframes. And, one resource unit may periodically and repeatedly appear within a resource pool. For example, resource units #0, #1, ..., and #(NF-1) are allocated in a manner of being repeated with a period of prescribed time in a resource pool. In particular, if a resource unit #0 is allocated to a UE, the UE is able to use all resource units indexed by the resource unit #0 in a single resource pool.

And, in order for a resource unit belonging to a resource pool or the resource pool itself to obtain diversity gain in time and/or frequency domain, it may be able to configure an index of a physical resource unit to which a logical resource unit is mapped to be changed with a predetermined pattern over time. In this resource unit structure, a resource pool may correspond to a set of resource units capable of being used by a UE intending to transmit and receive a D2D signal.

In embodiments of the present invention, a resource pool for performing D2D communication can be classified into various types. First of all, the resource pool can be classified according to contents/types of a D2D signal transmitted via each resource pool. For example, the D2D signal can be classified into a scheduling assignment (SA) signal, a D2D data channel, and a discovery channel signal.

The SA signal may correspond to a signal including information on a resource position of a D2D data channel, information on MCS (modulation and coding scheme) necessary for modulating and demodulating a D2D data channel, information on a MIMO transmission scheme, information on TA (timing advance), and the like. The SA signal can be independently transmitted in a prescribed resource unit or can be transmitted in an identical resource unit in a manner of being multiplexed with D2D data. When an SA signal and data are multiplexed, an SA resource pool may correspond to a set of resource units in which the SA signal and the data are transmitted in a manner of being multiplexed. In the embodiments of the present invention, a resource unit in which an SA signal is transmitted can be referred to as an SA channel or a D2D control channel.

The D2D data channel can be defined as a set of resource units used by UEs to transmit and receive D2D data using a resource designated via the SA. The D2D data channel can be multiplexed with an SA channel. And, a D2D data signal can be multiplexed without an SA signal.

If an SA signal and a D2D data channel are transmitted in a manner of being multiplexed in an identical resource unit, the D2D data channel except the SA signal can be transmitted only in a resource pool for the D2D data channel. In other word, resource units, which are used to transmit SA information in a specific resource unit of an SA resource pool, can also be used for transmitting D2D data in a resource pool for a D2D data channel.

The discovery channel corresponds to a set of resource units for transmitting a signal or a message that enables a neighboring UE to discover a transmission UE transmitting information such as ID of the UE, and the like.

In this case, an SA channel for transmitting an SA signal, a data channel for transmitting and receiving D2D data, and a discovery channel for transmitting and receiving a discovery signal can be included in a resource pool. Or, the SA channel, the D2D data channel, and the discovery channel can be configured by a separate resource pool.

Although contents of D2D signal are identical to each other, it may allocate a different resource pool according to a transmission/reception attribute of the D2D signal.

For example, in case of the same D2D data channel or the same discovery message, the D2D data channel or the discovery signal can be configured by a different resource pool according to (1) a transmission timing determination scheme (e.g., whether a D2D signal is transmitted at the time of receiving a synchronization reference signal or the timing to which a prescribed timing advance is added) of a D2D signal, (2) a resource allocation scheme (e.g., whether a transmission resource of an individual signal is designated by an eNB or an individual transmission UE selects an individual signal transmission resource from a resource pool), (3) a signal format (e.g., the number of symbols occupied by a D2D signal in a subframe, the number of subframes used for transmitting a D2D signal, etc.), (4) signal strength from an eNB, and/or (5) strength of transmit power of a D2D UE, and the like.

In the embodiments of the present invention, for clarity, a method for an eNB to directly schedule a resource region of a D2D transmission UE in D2D communication is defined as a mode 1. If a D2D transmission resource region is configured in advance or an eNB allocates the transmission resource region and a UE directly selects a resource unit for performing D2D communication from the transmission resource region, it is defined as a mode 2.

In case of performing D2D discovery, if a UE directly selects a resource unit for performing D2D discovery from a resource region configured in advance or a resource region indicated by an eNB, it is defined as a type 1. If an eNB directly schedules a resource region for a discovery channel, it is defined as a type 2.

In the embodiments of the present invention, channels for performing D2D communication can also be called as sidelink. In this case, an SA channel can also be called a PSCCH (physical sidelink control channel), a D2D synchronization signal is called a sidelink synchronization signal (SLSS), and a control channel on which most basic system information for D2D communication is broadcasted is called a physical sidelink broadcast channel (PSBCH). The SLSS can also be referred to as a PD2DSCH (physical D2D synchronization channel). And, a channel for transmitting a D2D discovery signal can be defined as a physical sidelink discovery channel (PSDCH).

According to LTE-A system (Rel-12, 13 or later) a D2D communication UE is configured to transmit PSBCH and SLSS together or transmit SLSS. LTE-A system newly defines S-RSRP to match synchronization with a different UE in D2D communication. In particular, when UEs intend to perform D2D communication, the UEs measure the S-RSRP. The UEs match synchronization with a UE of which a measurement value of the S-RSRP is equal to or greater than a specific value only and performs D2D communication. In this case, the S-RSRP can be measured from a DMRS on PSBCH. Yet, for a D2D relay operation, the S-RSRP can be measured from a DMRS on PSDCH.

An out-coverage UE measures the S-RSRP based on a DMRS of DMRS signal strength of SLSS and/or PSBCH/PSCCH/PSSCH to determine whether or not the UE becomes a synchronization source in which a D2D relay operation is to be performed.

Vehicle-to-vehicle communication may transmit the following messages.
- Cooperative awareness message (CAM): The CAM includes the basic vehicle information, including vehicle dynamic state information such as direction and speed, vehicle static data such as dimension, a status of exterior light, and path history. The size of the CAM message may be between 50 and 300 bytes.
- Decentralized environmental notification message (DENM)

When the CAM includes security overhead, the CAM may have a larger message size than in the case in which the CAM does not include security overhead. The CAM may be transmitted with a predetermined period and the DENM may be transmitted only when a specific event occurs.

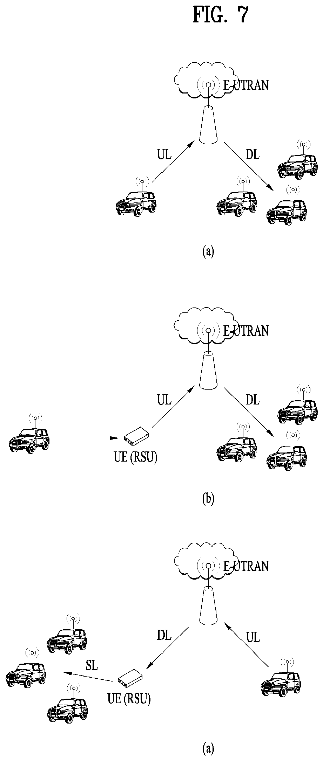

FIGS. 7A to 7C are diagrams for explanation of a communication system according to an embodiment of the present invention.

The present invention proposes a method of effectively using a resource in UE-to-UE communication, in particular, in UE-to-UE communication using a network in vehicle-to-vehicle communication (in particular, communication in which an eNB or a roadside unit (RSU) relays a signal of a UE).

For convenience of description, the present invention defines the following terms.
- Fixed-nod (F-node): The F-node is a node at a fixed position, for transmitting a vehicle to vehicle (V2V) or vehicle to everything (V2X) message. For example, an example of the F-node may be a roadside unit (RSU) installed at an eNB or a roadside.
- Uu based V2V (or V2X): The Uu based V2V may refer to V2V communication using a cellular network. A UE may transmit a message thereof toward an eNB and the eNB may re-transmit in DL the received message to surrounding messages. The Uu based V2X may be represented in FIG. 7A.
- Uu based V2V (or V2X) through roadside unit (RSU): The Uu based V2V (or V2X) through roadside unit (RSU) may be considered as an operation of relaying and transmitting UL data to an eNB by the roadside unit (RSU) as shown in FIG. 7B and an operation of relaying DL data by the roadside unit (RSU) as shown in FIG. 7C.

When a V2V message is transmitted and received through an eNB or a roadside unit (RSU), the eNB or the RSU may not accurately recognize a position of a transmission UE. In this case, during relaying a received packet, the eNB or the RSU may not recognize a target receiver to which the received packet is transmitted. In this case, the eNB or the RSU may share the received information through a backhaul network and, then, may require an operation of transmitting the information to overlap in an area expected to have a transmitter. In this case, a plurality of eNBs or RSUs needs to transmit common information and, thus, load of DL transmission or sidelink transmission may be seriously increased. However, when an eNB or an RSU accurately recognizes a position of a transmission UE, the eNB or the RSU may broadcast a signal only to a region within V2X coverage of a corresponding UE, thereby reducing load in DL or sidelink.

According to an embodiment thereof, a D2D UE may measure geographical information of the D2D UE to transmit geographical information and may transmit a message including geographical information of the D2D UE, measured through a specific resource region determined depending on a position of the D2D UE. The message may also be referred to as a safety message. For example, a transmission resource may be divided into a plurality of resource regions and the plurality of resource regions may be mapped to respective one or more reference points.

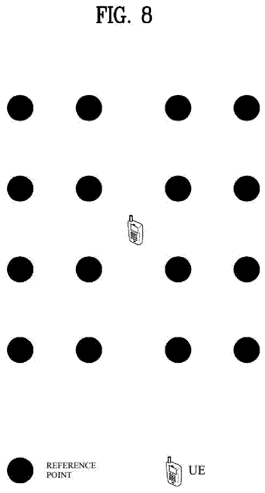

FIG. 8 is a diagram for explanation of a reference point according to an embodiment of the present invention.

Referring to FIG. 8, one or more reference points may be configured in a specific region. For example, the reference point may be a position of a physical device such as an eNB or a roadside unit (RSU). As another example, the reference point may be virtual points configured with coordinate information or a virtual range configured with coordinate information.

For example, geographical information of a UE may be coordinate information of the UE, measured using a global positioning system (GPS). Alternatively, the geographical information of the UE may be one or more of coordinate information and identification (ID) of a reference point closest to the D2D UE or distance information from the reference point. In an existing global navigation satellite system (GNSS), position information of a UE may be represented by a latitude of 23 bits, longitude of 24 bits, and altitude of 15 bits. The information may be excessive overhead. Accordingly, it may be required to represent position information simplified based on a corresponding country, city, or specific region. In this case, an eNB or a roadside unit (RSU) that receives the information may recognize a region in which a corresponding UE is present, may predict a reception region, and may transmit a message of the corresponding UE to the reception region. In other words, a reference point may be configured in a specific area and position information may be displayed based on each reference point and may be transmitted to an eNB.

In this case, UEs need to recognize a common reference point with an eNB and, to this end, information on the reference point may be preconfigured or may be signaled to a UE via a physical layer or high layer signal by a network. For example, reference points may be any one of virtual points configured with coordinate information or a virtual range configured with coordinate information. For example, information on the reference point may be configured in units of several hundreds of km to several tens of km and, as necessary, may be configured in units of several tens of m. For example, an internal between reference points or granularity for signaling position information may be changed depending on areas.

For example, reference points indicating position information of a UE may be sparsely configured on the highway and, on the other hand, may be densely configured in city. In this case, the UE may change granularity of position information to represent a position thereof. The granularity information may be preconfigured, may be adaptively determined depending on a position of the UE, or may be signaled to the UE by a network. Alternatively, the UE may autonomously determine granularity within a predetermined range and may signal the granularity to a network (e.g. F-node).

As another example, when the mobility of a UE is high, a reference point may be frequently changed. In this case, a UE may signal information on a reference point closest thereto and position difference information between the reference point and the UE to a network (e.g. F-node). In this case, the position information of the reference point may be fed back or a reference point ID (e.g. cell ID or RSU ID) may be fed back. In addition, such a method may be interpreted as a method of dividing an area into regions with some small units and feeding back information on the region. For example, an area of a specific country is configured with a square region in units of latitude, longitude, and distance of d based on a specific position and IDs may be sequentially applied to respective regions. The UE may simplify position information using a method of feeding back an ID of a region depending on a position of the UE. A method of reporting the position information may advantageously and highly reduce a bit number indicating a position of a UE in GNSS.

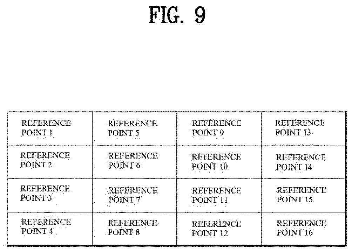

FIG. 9 is a diagram for explanation of a resource region according to an embodiment of the present invention.

Referring to FIG. 9, a transmission resource may be divided into a plurality of resource regions and the plurality of resource regions may be mapped to one or more reference points, respectively. For example, as shown in FIG. 9, the transmission resource may be divided into 16 regions and each of the divided resource regions may be mapped to one reference point according to one to one correspondence. The plurality of reference points may be represented to be spaced apart from a specific reference point by a predetermined distance in horizontal and vertical directions. A resource region may be configured every closest reference point based on each reference point and, in this case, the resource region and the reference point may not be limited to one to one correspondence. In addition, an entire or partial region of the transmission resource may be divided.

For example, an eNB may configure a specific resource region and may transmit information on the resource region to the UE in such a way that the UE autonomously selects a resource and transmits the resource. In this case, the eNB may divide a transmission resource based on RSRP to configure the transmission resource. In other words, the plurality of divided resource regions may be determined to be available when reception power of a signal received from each of the mapped reference points satisfies a predetermined condition and a message may be transmitted to a corresponding resource region.

For example, the UE may transmit a message in the corresponding resource region when the use condition of the corresponding resource region is satisfied and, thus, the eNB may be capable of implicitly recognizing a region in which the corresponding UE is present. For this operation, the eNB may configure an upper/lower limit of an RSRP threshold by which a corresponding resource region is to be used for each resource region. In this case, an RSRP limit condition of another adjacent cell as well as a RSRP limit condition of a specific cell may be additionally applied to a specific resource region.

For example, assuming that two cells A and B are present and UEs are present at a boundary between the two cells, a resource region that is capable of using only a UE having RSRP from cell A with a predetermined threshold or less and RSRP from cell B with a predetermined threshold or less may be configured by a network. In addition, only a UE that satisfies a corresponding condition may be configured to use the resource region. In this case, an eNB that receives a signal of the corresponding resource region may recognize an approximate position of a UE that transmits the corresponding message. The UE that transmits the message through the resource region may be recognized to be positioned at a boundary of cells. Accordingly, the message of the corresponding UE may be transmitted in DL in both cells A and B.

As another example, a resource region in which RSRP of a specific cell is a predetermined threshold or more may be present. UEs that perform transmission in the resource region may be recognized at the center of the corresponding cell. Accordingly, the message of the corresponding UE may be transmitted only in a single cell.

As another example, a limit condition (threshold) of measurement of a roadside unit (RSU) may be configured as a condition for using a resource region using the same method as configuration of an RSRP threshold of an eNB. A network may signal a limited condition of RSRP or RSU measurement for each resource region to UEs via a physical layer or high layer signal or pre-configure a limit condition for each resource region or each region as a specific value.

For example, geographical information of a D2D UE may be included in any one of a media access control (MAC) header or a control element of a message and may be transmitted. The geographical information of the UE may include at least one of a position, speed, or direction of the UE.

A conventional CAM message may include position information of a UE. Accordingly, when an eNB is capable of interpreting position information of the UE, only cells around the corresponding UE may broadcast to prevent excessive DL or sidelink transmission during DL or sidelink transmission without a separate additional operation. However, in this method, when an eNB or a roadside unit (RSU) is not capable of receiving a security message of a UE, interpretation may not be possible or delay may occur until the security message is received. Accordingly, other UE, eNB, and roadside unit (RSU) may also obviously include interpretable position information to a separate field (MAC header or some fields of a data region) without reception of security overhead and may transmit the information. In this case, when a plurality of eNBs or roadside units receive a signal of a specific UE, the eNBs or the roadside units may determine whether the received signal of the specific UE needs to be forwarded, based on the position information included in the MAC header or the specific field of the corresponding UE. Then, when the received signal needs to be forwarded, a message of the corresponding UE may be transmitted in DL or sidelink.

As another example, a cell ID and/or a roadside unit (RSU) ID may be included in some regions of a control element (CE) or a MAC header of a message (e.g. V2X message) and may be transmitted. In other words, to determine a region in which a UE is positioned, the UE may include an ID of a cell camped by the UE or an ID of a roadside unit (RSU) determined to be closest to the UE and may transmit the information. The UE may include an ID of an eNB or a roadside unit (RSU) that is currently closest thereto in a MAC header and/or a control element (CE) or a separate field and may transmit the information. Here, camping or selecting may refer to a cell that is considered as having the best RSRP or a cell that is selected using a specific method by a UE. In the case of a roadside unit (RSU), camping or selecting may refer to a roadside unit (RSU) with the best measurement of a signal transmitted by the roadside unit (RSU). Hereinafter, the RSRP may refer to measurement of reception power of a specific reference signal transmitted by an eNB or a UE and transmission of an ID and RSRP may be extensively interpreted as transmitting an ID of the UE and reception power of a reference signal transmitted by the UE in terms of a roadside unit (RSU). In the present invention, transmission of an ID and RSRP may be interpreted as including transmission of both an eNB and a UE.

According to another embodiment of the present invention, (cell ID and/or RSU ID) + (RSRP and/or RSU reference signal reception power) may be included in a MAC header, a control element (CE), or some regions of a message (e.g. V2X message). In other words, the UE may include RSRP measured for each cell (for each UE) and higher N cell IDs (or UE IDs) (in a sequential order from a highest RSRP) in a separate field of a message (or packet), a MAC header, or a control element (CE) and may transmit the information rather than including and transmitting only the selected cell ID. Through this method, a UE at a cell boundary may transmit similar RSRPs of a plurality of cells and an eNB or a roadside unit (RSU) may recognize the RSRPs and may transmit an eNB or roadside unit (RSU) at a boundary may transmit the RSRPs together. On the other hand, when RSRP of a specific eNB or a specific roadside unit (RSU) is excessively higher than RSRP of another cell or another roadside unit (RSU), the eNB or the roadside unit may consider that the UE is cell-centered and, accordingly, adjacent cells may not transmit a message. In this case, transmission overhead of DL or sidelink may be prevented. As another example, cells may be aligned in specific order and, then, whether RSRP is at a predetermined level may be transmitted in a MAC header or control element (CE) of a message or some regions of the message in the form of a bitmap.

According to another embodiment of the present invention, (cell ID with best RSRP and/or RSU ID) + (neighboring cell ID and/or neighboring RSU ID) may be transmitted in a MAC header or control element (CE) of a message (e.g. V2X message) or some regions of the message. To this end, the UE may also transmit a cell ID positioned in a moving direction in a MAC header or a control element (CE) or a specific region of a message. The UE may also transmit higher N cell IDs of a cell with a next subsequent RSRP. An eNB or a roadside unit (RSU) may perform DL or sidelink transmission in consideration of them. Like in the eNB, an ID of higher N adjacent roadside units (RSUs) from highest RSRP may be included and transmitted.

According to another embodiment of the present invention, a message including measured geographical information of a UE may be transmitted only when a specific condition is satisfied. For example, the specific condition may be one or more of the case in which a reference point closest to the UE is changed, the case in which the UE is moved away from the reference point by a specific distance or more, the case in which the UE is moved away from a position corresponding to a time point of transmitting a message by a specific range or more, or the case in which a predetermined time period elapses from a time point when the UE transmits a message.

For example, when a UE is moved away from the reference point by a predetermined distance or more, information indicating that a position of the UE is to be changed to another reference point soon to a network (e.g. F-node) to indicate the change. When a distance difference from the reference point along a moving path of a UE is a predetermined threshold or more, the UE may report information indicating that the distance difference is greater than position difference information or a threshold to the F-node. Alternatively, when a reference point of the UE is changed, the UE may signal the change to the F-node to indicate the change.

As another example, a rule may also be defined to signal change when change of position information is changed by a predetermined threshold or more as well as when the reference point of the UE is changed. For example, when the UE transmits a message every 100 ms, position information may be transmitted in a field that is immediately interpretable by an eNB or a roadside unit (RSU) only when change in the position information exceeds a predetermined threshold. In this case, time stamp information may also be transmitted. According to the rule, excessive position information signaling of the UE may be reduced.

For example, as described above, when a UE transmit position information in each message, excessive overhead may be generated. Accordingly, a position may be abruptly changed or the change may be signaled at a predetermined time interval. To this end, the UE may transmit position information thereof including time information (time stamp) indicating a time point when the position information is measured during report of the position information. In this case, during feedback based on time information or absolute time, too excessive overhead may be caused. Accordingly, time difference information may be feedback based on a specific reference time to reduce overhead. For example, time information of currently reported position information may be signaled based on SFN (or DFN) of a network.

According to another embodiment of the present invention, the aforementioned position information may be signal to an eNB or a roadside unit (RSU) from a UE via a physical layer or high layer signal. A channel (physical layer, MAC header, control element (CE), or RRC) through which the UE performs signaling or a condition in which the UE performs signaling may be preconfigured or may be indicated by a network via a physical layer or a high layer signal. The UE may feedback information on speed, direction, etc., of the UE as well as a position of the UE to an eNB or an RSU via a physical layer or a high layer. The information may be collectively referred to as geographical information. Information of the geographical information, to be signaled to an eNB or a RSU by the UE, a situation in which the UE performs the signaling, and a channel through which the UE performs the signaling, may be preconfigured or may be indicated by a network via a physical layer or high layer signal. The information feedback may be performed only on RRC-connected UEs. Alternatively, when an information feedback condition via SIB, whether feedback is performed, etc., are signaled, a specific UE among RRC idle UEs may be converted into a connected mode and may signal corresponding information to an eNB or a roadside unit (RSU) using a Uu link transmission method in an idle mode.

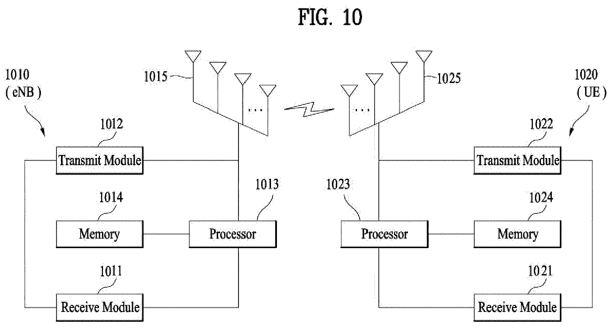

FIG. 10 is a diagram illustrating a configuration of a base station and a user equipment according to the embodiment of the present invention.

Referring to FIG.10, the base station 1010 according to the present invention may include a reception module 1011, a transmission module 1012, a processor 1013, a memory 1014, and a plurality of antennas 1015. The plurality of antennas 1015 means the base station that supports MIMO transmission and reception. The reception module 1011 may receive various kinds of signals, data and information on an uplink from the user equipment. The transmission module 1012 may transmit various kinds of signal, data and information on a downlink to the user equipment. The processor 1013 may control the overall operation of the base station 1010.

The processor 1013 of the base station 1010 according to one embodiment of the present invention may process requirements in the aforementioned embodiments.

In addition, the processor 1013 of the base station 1010 performs an operation for information received by the base station 1010, information to be transmitted to the outside, etc., and the memory 1014 may store the operation processed information for a predetermined time and may be replaced with an element such as a buffer (not shown).

Subsequently, referring to FIG. 10, the user equipment 1020 of the present invention may include a reception module 1021, a transmission module 1022, a processor 1023, a memory 1024, and a plurality of antennas 1025. The plurality of antennas 1025 mean the user equipment that supports MIMO transmission and reception. The reception module 1021 may receive various kinds of signals, data and information on a downlink from the base station. The transmission module 1022 may transmit various kinds of signal, data and information on an uplink to the base station. The processor 1023 may control the overall operation of the user equipment 1020.

The processor 1023 of the user equipment 1020 according to one embodiment of the present invention may process requirements in the aforementioned embodiments.

In addition, the processor 1023 of the user equipment 1020 performs an operation for information received by the user equipment 1020, information to be transmitted to the outside, etc., and the memory 1024 may store the operation processed information for a predetermined time and may be replaced with an element such as a buffer (not shown).

The details of the aforementioned base station and the aforementioned user equipment may be configured in such a manner that the aforementioned various embodiments of the present invention may independently be applied to the aforementioned base station and the aforementioned user equipment, or two or more embodiments may simultaneously be applied to the aforementioned base station and the aforementioned user equipment, and repeated description will be omitted for clarification.

Also, in the description of FIG. 10, the description of the base station 910 may equally be applied to a relay station as a downlink transmission entity or an uplink reception entity, and the description of the user equipment 1020 may equally be applied to a relay station as a downlink reception entity or an uplink transmission entity.

The embodiments according to the present invention may be implemented by various means, for example, hardware, firmware, software, or their combination.

If the embodiment according to the present invention is implemented by hardware, the embodiment of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

If the embodiment according to the present invention is implemented by firmware or software, the embodiment of the present invention may be implemented by a type of a module, a procedure, or a function, which performs functions or operations described as above. A software code may be stored in a memory unit and then may be driven by a processor. The memory unit may be located inside or outside the processor to transmit and receive data to and from the processor through various means which are well known.

It will be apparent to those skilled in the art that the present invention may be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. It is also obvious to those skilled in the art that claims that are not explicitly cited in each other in the appended claims may be presented in combination as an embodiment of the present invention or included as a new claim by a subsequent amendment after the application is filed.

### [industrial Applicability]

The embodiments of the present invention may be applied to various wireless communication systems.

## Claims

1. A method of transmitting geographical information by a device to device (D2D) user equipment (UE) in a wireless communication system for supporting D2D communication, the method comprising:
measuring the geographical information of the D2D UE; and
transmitting a message including the measured geographical information of the D2D UE through a specific resource region determined depending on a position of the D2D UE.

2. The method according to claim 1, wherein a transmission resource is divided into a plurality of resource regions and the plurality of resource regions is mapped to respective one or more reference points.

3. The method according to claim 2, wherein the one or more reference points are at least one of a base station (BS) or a roadside unit (RSU) and the plurality of resource regions are available when reception power of a signal received from the one or more mapped reference points satisfies a predetermined condition.

4. The method according to claim 3, wherein the specific resource region is one or more of the available resource regions.

5. The method according to claim 2, wherein one or more reference points are any one of virtual points configured with coordinate information or a virtual range configured with coordinate information.

6. The method according to claim 1, wherein the geographical information of the D2D UE is included in any one of a control message and media access control (MAC) header of the message.

7. The method according to claim 1, wherein the geographical information of the D2D UE includes at least one of a position, speed, or direction of the D2D UE.

8. The method according to claim 1, wherein the message including the measured geographical information of the D2D UE is transmitted when a specific condition is satisfied.

9. The method according to claim 8, wherein the specific condition is one or more of a case in which a reference point closest to the D2D UE is changed, a case in which the D2D UE is moved away from the reference point by a specific distance or more, a case in which the D2D UE is moved away from a position corresponding to a time point of transmitting the message by a specific range or more, or a case in which a predetermined time period elapses from a time point when the UE transmits the message.

10. The method according to claim 1, wherein the geographical information of the D2D UE is coordinate information of the UE, measured using a global positioning system (GPS).

11. The method according to claim 1, wherein the geographical information of the D2D UE is one or more of coordinate information and identification (ID) of a reference point closest to the D2D UE, or distance information from the reference point.

12. The method according to claim 1, wherein the geographical information of the D2D UE includes a time stamp.

13. A device to device (D2D) user equipment (UE) for transmitting geographical information in a wireless communication system for supporting D2D communication, comprising:
a transmission module; and
a processor connected to the transmission module,
wherein the processor is configured to measure the geographical information of the D2D UE and to transmit a message including the measured geographical information of the D2D UE through a specific resource region determined depending on a position of the D2D UE, through the transmission module.
